# EUROPEAN PATENT APPLICATION

(11) **EP 4 693 993 A1**
(43) Date of publication of application: **11.02.2026**
(21) Application number: 23931553.4
(22) Date of filing: 07.04.2023
(51) Int. Cl.: H04L 5/00

(54) **RESOURCE DETERMINATION METHODS AND APPARATUSES, COMMUNICATION APPARATUS AND STORAGE MEDIUM**

(71) Applicant: Beijing Xiaomi Mobile Software Co., Ltd., Beijing 100085 (CN)
(72) Inventor: WU, Shijuan, Beijing 100085 (CN); WANG, Lei, Beijing 100085 (CN)
(74) Representative: Stöckeler, Ferdinand
(86) International application number: PCT/CN2023/087058
(87) International publication number: WO 2024/207492

(57) **Abstract**

The present disclosure relates to the technical field of communications, and specifically to method for determining resources and apparatuses, a communication apparatus and a storage medium, a method for determining resource comprising: receiving a channel state information reference signal (CSI-RS), the count of configurable frequency-domain resource units of a channel state information reference signal resource being greater than or equal to the minimum of a first count and a second count, and the second count being the count of the frequency-domain resource units occupied by a first frequency-domain resource capable of receiving downlink transmission. In the present disclosure, a terminal can receive the CSI-RS, and determine that the count of the configurable frequency-domain resource units of the CSI-RS is greater than or equal to the minimum of the first count and the second count. The count of the frequency-domain resource units of the CSI-RS resource configured by a network device for the terminal is not less than the minimum of the first count and the second count. Therefore, the present disclosure helps to ensure that the network device and the terminal have the consistent understanding of the CSI-RS resource, so as to ensure the quality of subsequent communication between the network device and the terminal.

## Description

### FIELD

The present disclosure relates to the field of communication technologies, and particularly to a method for determining resource, a resource determination apparatus, a communication system, a communication device, and a computer-readable storage medium.

### BACKGROUND

A network device may send a Channel State Information Reference Signal (CSI-RS) to a terminal and may configure a CSI-RS resource for the terminal. The terminal may receive the CSI-RS on the CSI-RS resource configured by the network device. However, in some scenarios, problems may exist when the network device configures the CSI-RS resource for the terminal.

### SUMMARY

Embodiments of the present disclosure provide a method for determining resource, a resource determination apparatus, a communication system, a communication device, and a computer-readable storage medium, to solve technical problems in the related art.

According to a first aspect of the embodiments of the present disclosure, a method for determining resource is provided, performed by a terminal, the method includes: receiving a channel state information reference signal according to a channel state information reference signal resource, where a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

According to a second aspect of the embodiments of the present disclosure, a method for determining resource is provided, performed by a network device, the method includes: determining, according to a minimum of a first count and a second count, a minimum of a count of frequency-domain resource units of a channel state information reference signal resource configured for a terminal, where the second count is a count of frequency-domain resource units occupied by a first frequency-domain resource capable of receiving downlink transmission by the terminal.

According to a third aspect of the embodiments of the present disclosure, a resource determination apparatus is provided, where the apparatus is configured in a terminal device, and the apparatus includes: a receiving module, configured to receive a channel state information reference signal according to a channel state information reference signal resource, where a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

According to a fourth aspect of the embodiments of the present disclosure, a resource determination apparatus is provided, where the apparatus is configured in a network-side device, and the apparatus includes: a processing module, configured to determine, according to a minimum of a first count and a second count, a minimum of a count of frequency-domain resource units of a channel state information reference signal resource configured for a terminal, where the second count is a count of frequency-domain resource units occupied by a first frequency-domain resource capable of receiving downlink transmission by the terminal.

According to a fifth aspect of the embodiments of the present disclosure, a communication system is provided, including a terminal and a network device, where the terminal is configured to implement the method for determining resource performed by the terminal described above, and the network device is configured to implement the method for determining resource performed by the network device described above.

According to a sixth aspect of the embodiments of the present disclosure, a communication device is provided, including: a processor; a memory for storing a computer program; when the computer program is executed by the processor, the method for determining resource performed by the terminal described above is implemented.

According to a seventh aspect of the embodiments of the present disclosure, a communication device is provided, including: a processor; a memory for storing a computer program; when the computer program is executed by the processor, the method for determining resource performed by the network device described above is implemented.

According to an eighth aspect of the embodiments of the present disclosure, a computer-readable storage medium is provided, for storing a computer program, where when the computer program is executed by a processor, the method for determining resource performed by the terminal described above is implemented.

According to a ninth aspect of the embodiments of the present disclosure, a computer-readable storage medium is provided, for storing a computer program, where when the computer program is executed by a processor, the method for determining resource performed by the network device described above is implemented.

According to the embodiments of the present disclosure, the terminal may determine a first frequency-domain resource capable of receiving downlink transmission and determine the count of frequency-domain resource units occupied by the first frequency-domain resource, for example, referred to as the second count. Then, the terminal may receive the CSI-RS and determine that the count of configurable frequency-domain resource units of the CSI-RS is greater than or equal to the minimum of the first count and the second count. The count of frequency-domain resource units of the CSI-RS resource configured by the network device for the terminal will not be less than the minimum of the first count and the second count. Accordingly, it is beneficial to ensure that the understanding of the CSI-RS resource by the network device and the terminal is consistent, so as to ensure the quality of subsequent communication between the network device and the terminal.

### BRIEF DESCRIPTION OF THE DRAWINGS

In order to more clearly illustrate the technical solutions in the embodiments of the present disclosure, the drawings used in the description of the embodiments will be briefly introduced below. Obviously, the drawings in the following description are only some embodiments of the present disclosure. For those of ordinary skill in the art, other drawings may be obtained based on these drawings without creative effort.
FIG. 1 is a schematic diagram of an application scenario according to an embodiment of the present disclosure.
FIG. 2 is a schematic diagram of uplink resources and downlink resources according to an embodiment of the present disclosure.
FIG. 3 is a schematic flowchart of a method for determining resource according to an embodiment of the present disclosure.
FIG. 4 is a schematic diagram of a first frequency-domain resource according to an embodiment of the present disclosure.
FIG. 5 is a schematic diagram of another first frequency-domain resource according to an embodiment of the present disclosure.
FIG. 6 is a schematic flowchart of another method for determining resource according to an embodiment of the present disclosure.
FIG. 7 is a schematic flowchart of another method for determining resource according to an embodiment of the present disclosure.
FIG. 8 is a schematic flowchart of a method for determining resource according to an embodiment of the present disclosure.
FIG. 9 is a schematic block diagram of a resource determination apparatus according to an embodiment of the present disclosure.
FIG. 10 is a schematic block diagram of a resource determination apparatus according to an embodiment of the present disclosure.
FIG. 11 is a schematic block diagram of a resource determination apparatus according to an embodiment of the present disclosure.
FIG. 12 is a schematic block diagram of a resource determination apparatus according to an embodiment of the present disclosure.

### DETAILED DESCRIPTION

The technical solutions in the embodiments of the present disclosure will be clearly and completely described below with reference to the drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative effort shall fall within the protection scope of the present disclosure.

The terms used in the embodiments of the present disclosure are for the purpose of describing specific embodiments only and are not intended to limit the embodiments of the present disclosure. The singular forms "a" and "the" used in the embodiments of the present disclosure and the appended claims are also intended to include plural forms, unless the context clearly indicates otherwise. It should also be understood that the term "and/or" as used herein refers to and includes any and all possible combinations of one or more associated listed items.

It should be understood that although terms such as first, second, third, etc. may be used in the embodiments of the present disclosure to describe various types of information, this information should not be limited by these terms. These terms are only used to distinguish information of the same type from each other. For example, without departing from the scope of the embodiments of the present disclosure, first information may also be referred to as second information, and similarly, second information may also be referred to as first information. Depending on the context, the word "if" as used herein may be interpreted as "when" or "upon" or "in response to determining".

For the sake of brevity and ease of understanding, the terms "greater than" or "less than", "higher than" or "lower than" are used herein when characterizing size relationships. However, those skilled in the art will understand that the term "greater than" also encompasses the meaning of "greater than or equal to", and "less than" also encompasses the meaning of "less than or equal to"; the term "higher than" encompasses the meaning of "higher than or equal to", and "lower than" also encompasses the meaning of "lower than or equal to".

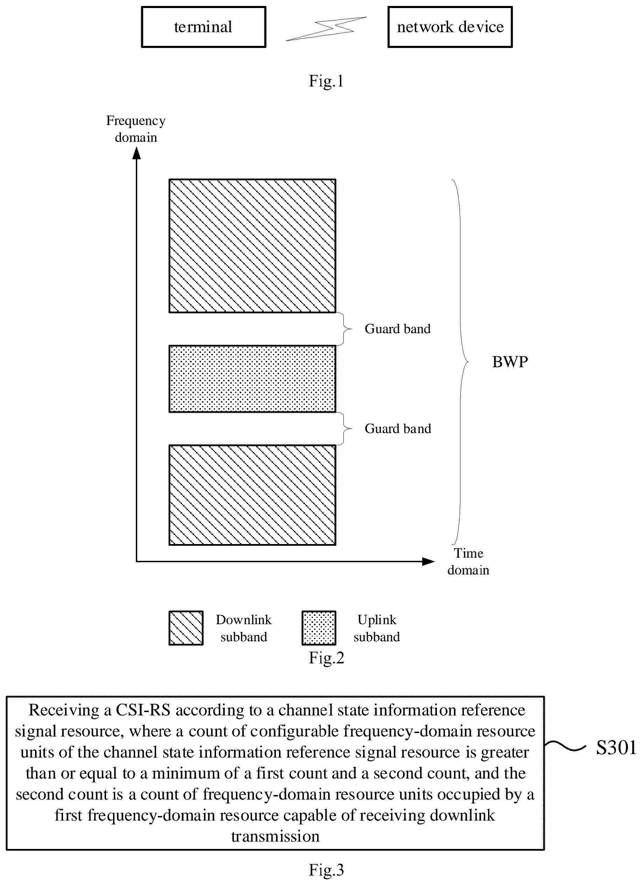

FIG. 1 is a schematic diagram of an application scenario according to an embodiment of the present disclosure.

As shown in FIG. 1, the embodiments of the present disclosure may be applied to a scenario where a terminal communicates with a network device, but are not limited to this scenario. The entities shown in FIG. 1 are exemplary. The implementations or embodiments of the present disclosure may include all or part of the entities in FIG. 1, and may also include other entities not shown in FIG. 1. The number of entities is arbitrary and not limited to FIG. 1. The connection relationships shown in FIG. 1 are exemplary. Any entities may or may not be connected, and the connection may be in any manner, may be direct or indirect, may be wired or wireless.

In an embodiment, the network device may configure a subband for the terminal, for example, may configure an uplink subband for the terminal in a first slot, and may configure a downlink subband for the terminal in a second slot.

The first slot includes at least one of: a downlink slot, a flexible slot. The second slot includes at least one of: an uplink slot, a flexible slot.

The network device may perform full-duplex communication in the first slot and the second slot. Therefore, the first slot and the second slot may also be referred to as Subband Full Duplex (SBFD) slots, where the first slot is an SBFD slot configured with an uplink subband, and the second slot is an SBFD slot configured with a downlink subband. The terminal may be a terminal capable of half-duplex communication in an SBFD slot. For example, in an SBFD slot, the terminal may perform uplink transmission but cannot simultaneously receive downlink transmission, or may receive downlink transmission but cannot simultaneously perform uplink transmission. The terminal may be a terminal supporting the SBFD feature, and may also be referred to as an SBFD aware terminal.

FIG. 2 is a schematic diagram of uplink resources and downlink resources according to an embodiment of the present disclosure.

As shown in FIG. 2, an activated bandwidth part (BWP) corresponding to a downlink time-domain unit includes an uplink subband, a guard band, and a downlink subband, where the network device configures an uplink subband and a guard band for the terminal in the downlink time-domain unit. In the frequency-domain resources corresponding to the downlink time-domain unit, frequency-domain resources other than the uplink subband and the guard band may be referred to as a downlink subband. Frequency-domain resources in the uplink subband may serve as uplink resources, frequency-domain resources in the downlink subband may serve as downlink resources, and the guard band may not be used for transmitting information, where the information includes data and/or signals, thereby achieving frequency-domain isolation to a certain extent and avoiding interference between uplink communication and downlink communication. Alternatively, when the network device schedules only uplink transmission or only downlink transmission, a guard band is not needed for frequency-domain isolation between uplink and downlink, and the guard band may be used for data transmission.

In an embodiment, the time-domain unit includes at least one of: a frame, a subframe, a slot, a symbol, where the symbol may be an Orthogonal Frequency Division Multiplexing (OFDM) symbol.

It should be noted that the embodiments of the present disclosure may be applicable to situations where a guard band is provided between an uplink subband and a downlink subband, and may also be applicable to situations where no guard band is provided between an uplink subband and a downlink subband.

In an embodiment, the network device may configure a CSI-RS resource for the terminal, and the terminal may receive the CSI-RS on the CSI-RS resource configured by the network device.

Since the related art does not consider SBFD slots, and there are no uplink subbands and/or downlink subbands in the BWP, the minimum value of configurable frequency-domain resources for the CSI-RS resource is determined based on the BWP. However, in the case where the network device configures an uplink subband and/or a downlink subband in the BWP for the terminal, SBFD slots will exist, that is, not all frequency-domain resources in a BWP are used for downlink communication or all for uplink communication.

Taking a downlink slot as an example, an uplink subband may be configured in the BWP corresponding to the downlink slot. Then, the resources actually available for transmitting the CSI-RS should be the frequency-domain resources in the BWP other than the uplink subband, for example, when the guard band is not considered, the resource used for transmitting the CSI-RS is the downlink subband. If the minimum value of configurable frequency-domain resources for the CSI-RS resource is still determined based on the BWP, in some cases, the minimum value of configurable frequency-domain resources for the CSI-RS resource may be determined to be equal to the BWP, but the terminal actually cannot receive the CSI-RS in the uplink subband in the BWP, that is, the frequency-domain resources on which the terminal actually receives the CSI-RS are smaller than the BWP. Therefore, it may cause inconsistent understanding of the CSI-RS resource between the network device and the terminal.

In an embodiment, the configurable frequency-domain resources of the CSI-RS resource may be characterized by the count of frequency-domain resource units. For example, the frequency-domain resource unit includes at least one of: a Resource Block (RB), a Resource Element (RE).

In an embodiment, the terminal includes, but is not limited to, a mobile phone, a tablet computer, a wearable device, a sensor, an Internet of Things device, and other communication devices. The terminal may communicate with a network device, and the network device includes, but is not limited to, network devices in communication systems such as 4G, 5G, 6G, for example, a base station, a core network, etc.

FIG. 3 is a schematic flowchart of a method for determining resource according to an embodiment of the present disclosure. The method for determining resource shown in this embodiment may be performed by a terminal.

As shown in FIG. 3, the method for determining resource may include the following steps:
Step S301: receiving a Channel State Information Reference Signal (CSI-RS) according to a channel state information reference signal resource, where a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

In an embodiment, when configuring the CSI-RS resource for the terminal, the network device may first determine a first frequency-domain resource available for the terminal to receive downlink transmission, and determine the second count of frequency-domain resource units occupied by the first frequency-domain resource. Then, according to the minimum of the first count and the second count, the minimum of the count of frequency-domain resource units of the CSI-RS resource configured for the terminal is determined. Then, the count of frequency-domain resource units of the CSI-RS resource configured by the network device for the terminal will not be less than the minimum of the first count and the second count.

Correspondingly, the terminal may determine a first frequency-domain resource capable of receiving downlink transmission and determine the count of frequency-domain resource units occupied by the first frequency-domain resource, for example, referred to as the second count. Then, the terminal may receive the CSI-RS and determine that the count of configurable frequency-domain resource units of the CSI-RS is greater than or equal to the minimum of the first count and the second count, which may also be described as not expecting that the count of configurable frequency-domain resource units of the CSI-RS resource is less than the minimum of the first count and the second count. Accordingly, it is beneficial to ensure that the understanding of the CSI-RS resource by the network device and the terminal is consistent, so as to ensure the quality of subsequent communication between the network device and the terminal.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to the minimum of the first count and the second count. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to the minimum of the first count and the second count; not expecting that the count of configurable frequency-domain resource units of the CSI-RS is less than the minimum of the first count and the second count.

In an embodiment, the first count is determined based on a predefined rule, or the first count is configured by the network device. For example, where the frequency-domain resource unit is an RB, the first count may be 24.

For example, the terminal determines that the count of frequency-domain resource units occupied by the first frequency-domain resource capable of receiving downlink transmission is 10, that is, the second count is 10. Then the terminal determines that the count of configurable frequency-domain resource units of the CSI-RS is greater than or equal to min {24, 10}, and/or does not expect that the count of configurable frequency-domain resource units of the CSI-RS resource is less than min {24, 10}. where min {24, 10} is 10, so the terminal determines that the count of configurable frequency-domain resource units of the CSI-RS is greater than or equal to 10, and/or does not expect that the count of configurable frequency-domain resource units of the CSI-RS resource is less than 10.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 10}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 10}; not expecting that the count of configurable frequency-domain resource units of the CSI-RS is less than min {24, 10}.

The first frequency-domain resource capable of receiving downlink transmission is exemplarily described below through several embodiments.

In an embodiment, the first frequency-domain resource capable of being used for receiving downlink transmission includes at least one of: a downlink subband; a guard band.

In an embodiment, the downlink subband includes at least one of: a frequency-domain resource, configured in a downlink slot, other than an uplink subband; a frequency-domain resource, configured in a downlink slot, other than an uplink subband and a guard band; a frequency-domain resource, configured in a flexible slot, other than an uplink subband; a frequency-domain resource, configured in a flexible slot, other than an uplink subband and a guard band; a downlink subband configured in an uplink slot; a downlink subband configured in a flexible slot.

For example, the network device configures an uplink subband for the terminal in a downlink slot. Frequency-domain resources in the frequency-domain resources corresponding to the downlink slot other than the uplink subband may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the downlink slot other than the uplink subband.

For example, the network device configures an uplink subband and a guard band for the terminal in a downlink slot. Frequency-domain resources in the frequency-domain resources corresponding to the downlink slot other than the uplink subband and the guard band may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the downlink slot other than the uplink subband and the guard band.

For example, the network device configures an uplink subband for the terminal in a flexible slot. Frequency-domain resources in the frequency-domain resources corresponding to the flexible slot other than the uplink subband may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the flexible slot other than the uplink subband.

For example, the network device configures an uplink subband and a guard band for the terminal in a flexible slot. Frequency-domain resources in the frequency-domain resources corresponding to the flexible slot other than the uplink subband and the guard band may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the flexible slot other than the uplink subband and the guard band.

For example, the network device configures a downlink subband for the terminal in an uplink slot. The terminal may receive downlink transmission in the downlink subband. In this case, the first frequency-domain resource capable of being used for receiving downlink transmission includes the downlink subband in the uplink slot.

For example, the network device configures a downlink subband for the terminal in a flexible slot. The terminal may receive downlink transmission in the downlink subband. In this case, the first frequency-domain resource capable of being used for receiving downlink transmission includes the downlink subband in the flexible slot.

In an embodiment, the first frequency-domain resource capable of receiving downlink transmission includes: continuous frequency-domain resources capable of receiving downlink transmission, where the channel state information reference signal resource includes continuous frequency-domain resource units.

That is, where the CSI-RS resource includes continuous frequency-domain resource units, the first frequency-domain resource capable of receiving downlink transmission may include continuous frequency-domain resources capable of receiving downlink transmission.

In an embodiment, if the first frequency-domain resource that the terminal can use for receiving downlink transmission includes a downlink subband, the terminal may determine the downlink subband where the starting frequency-domain resource unit is located as the first frequency-domain resource.

For example, if there is only one downlink subband in the activated BWP, the terminal may determine this downlink subband as the first frequency-domain resource. Based on the embodiment shown in FIG. 2, there are two downlink subbands in the activated BWP, and the two downlink subbands are discontinuous. Then, where the CSI-RS resource includes continuous frequency-domain resource units, the first frequency-domain resource capable of receiving downlink transmission may be one of these two downlink subbands. Therefore, when there are multiple continuous frequency-domain resources capable of receiving downlink transmission, considering that the CSI-RS resource can only include continuous frequency-domain resources, the CSI-RS resource can only be transmitted on one of the continuous frequency-domain resources, and the terminal needs to determine one continuous frequency-domain resource as the first frequency-domain resource.

The determination of one continuous frequency-domain resource as the first frequency-domain resource among multiple continuous frequency-domain resources capable of receiving downlink transmission is exemplarily described below through several embodiments.

In an embodiment, the first frequency-domain resource capable of receiving downlink transmission includes: a continuous frequency-domain resource which is capable of receiving downlink transmission based on a starting frequency-domain resource unit of the channel state information reference signal resource .

The network device may send configuration information of the CSI-RS resource to the terminal, and the terminal may determine the CSI-RS resource according to the configuration information. For example, the configuration information includes at least one of: a starting frequency-domain resource unit of the CSI-RS resource, a count of continuous frequency-domain resource units.

The terminal may determine, among multiple continuous frequency-domain resources capable of receiving downlink transmission, the continuous frequency-domain resource which is capable of receiving downlink transmission based on the starting frequency-domain resource unit as the first frequency-domain resource.

Exemplarily, a count of frequency-domain resource units by which the starting frequency-domain resource unit of the CSI-RS resource is offset from a starting frequency-domain resource unit of a common resource block CRB#0 may be a positive integer multiple of a first value.

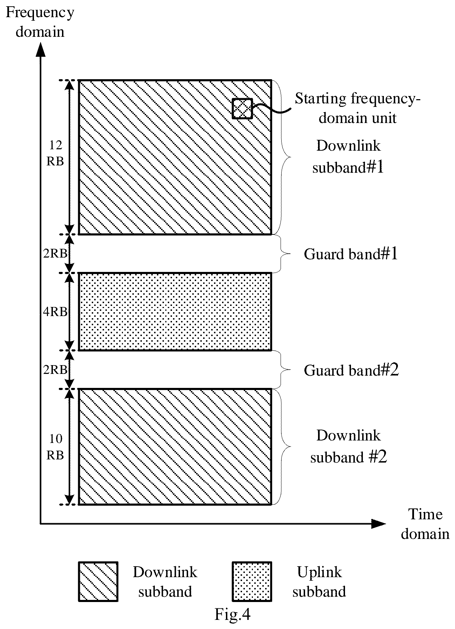

FIG. 4 is a schematic diagram of a first frequency-domain resource according to an embodiment of the present disclosure.

As shown in FIG. 4, based on the embodiment shown in FIG. 2, two downlink subbands may be determined in the activated BWP, which are downlink subband #1 and downlink subband #2. If the terminal determines, according to the configuration information of the CSI-RS resource, that the starting frequency-domain resource unit of the CSI-RS resource is in downlink subband #1, then downlink subband #1 may be determined as the first frequency-domain resource capable of receiving downlink transmission.

Taking the frequency-domain resource unit including RBs as an example, for example, in FIG. 4, downlink subband #1 includes 12 RBs, and downlink subband #2 includes 10 RBs. If downlink subband #1 is used as the first frequency-domain resource capable of receiving downlink transmission based on the above analysis, the second count is equal to the number of RBs contained in downlink subband #1, i.e., 12 RBs. Then the terminal determines that the count of configurable frequency-domain resource units of the CSI-RS is greater than or equal to min {24, 12}, and/or does not expect that the count of configurable frequency-domain resource units of the CSI-RS resource is less than min {24, 12}. where min {24, 12} is 12, so the terminal determines that the count of configurable frequency-domain resource units of the CSI-RS is greater than or equal to min {24, 12}, and/or does not expect that the count of configurable frequency-domain resource units of the CSI-RS resource is less than 12.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 12}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 12}; not expecting that the count of configurable frequency-domain resource units of the CSI-RS is less than min {24, 12}.

In an embodiment, if the first frequency-domain resource that the terminal can use for receiving downlink transmission includes a downlink subband and a guard band, the terminal may determine the downlink subband where the starting frequency-domain resource unit is located and the guard band connected to the downlink subband as the first frequency-domain resource.

For example, when the starting frequency-domain resource unit of the CSI-RS resource is in downlink subband #1 or guard band #1, downlink subband #1 and guard band #1 connected to downlink subband #1 may be determined as the first frequency-domain resource capable of receiving downlink transmission. The second count is equal to the sum of the number of RBs contained in downlink subband #1 and guard band #1, that is, 12+2=14. Then the terminal determines that the count of configurable frequency-domain resource units of the CSI-RS is greater than or equal to min {24, 14}, and/or does not expect that the count of configurable frequency-domain resource units of the CSI-RS resource is less than min {24, 14}. where min {24, 14} is 14, so the terminal determines that the count of configurable frequency-domain resource units of the CSI-RS is greater than or equal to min {24, 14}, and/or does not expect that the count of configurable frequency-domain resource units of the CSI-RS resource is less than 14.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 14}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 14}; not expecting that the count of configurable frequency-domain resource units of the CSI-RS is less than min {24, 14}.

In an embodiment, the first frequency-domain resource capable of receiving downlink transmission includes: a continuous frequency-domain resource, among all continuous frequency-domain resources capable of receiving downlink transmission, that occupies a smallest count of frequency-domain units.

When the terminal has multiple continuous frequency-domain resources capable of receiving downlink transmission, the terminal may determine the count of frequency-domain units occupied by each continuous frequency-domain resource, and use the continuous frequency-domain resource that occupies the smallest count of frequency-domain units as the first frequency-domain resource.

In an embodiment, if the first frequency-domain resource that the terminal can use for receiving downlink transmission includes a downlink subband, the terminal may determine the count of frequency-domain units occupied by each downlink subband, and determine the downlink subband that occupies the smallest count of frequency-domain units as the first frequency-domain resource.

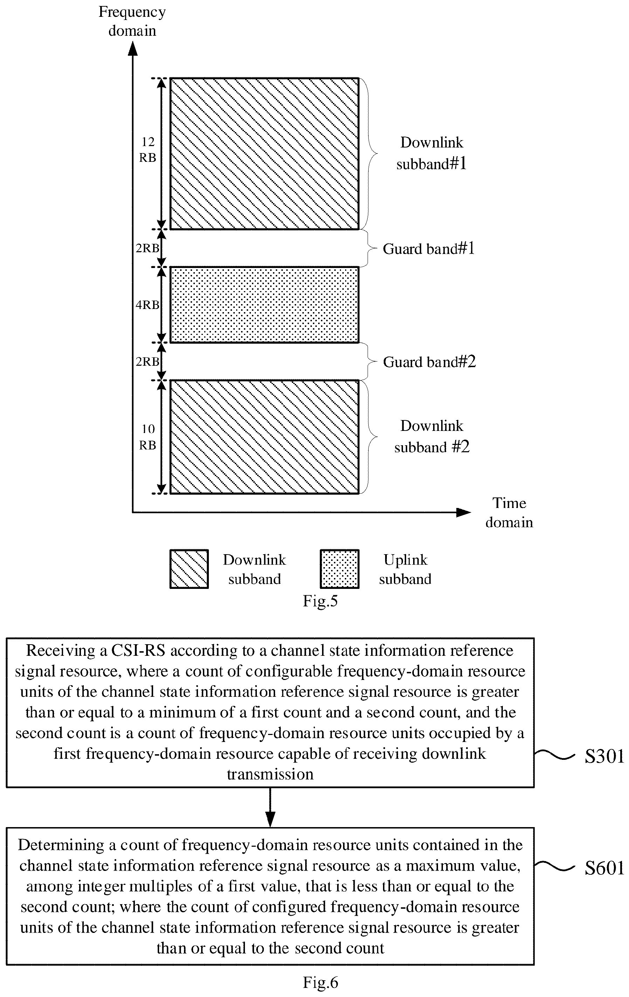

FIG. 5 is a schematic diagram of another first frequency-domain resource according to an embodiment of the present disclosure.

As shown in FIG. 5, based on the embodiment shown in FIG. 2, two downlink subbands may be determined in the activated BWP, which are downlink subband #1 and downlink subband #2. The terminal determines, according to the configuration information of the CSI-RS resource, that the starting frequency-domain resource unit of the CSI-RS resource is in downlink subband #2, so downlink subband #2 may be determined as the first frequency-domain resource capable of receiving downlink transmission.

Taking the frequency-domain resource unit including RBs as an example, for example, in FIG. 5, downlink subband #1 includes 12 RBs, and downlink subband #2 includes 10 RBs. Therefore, among the two downlink subbands, downlink subband #2 occupies the smallest number of RBs. Therefore, downlink subband #2 may be used as the first frequency-domain resource capable of receiving downlink transmission, so the second count is 10. Then the terminal determines that the count of configurable frequency-domain resource units of the CSI-RS is greater than or equal to min {24, 10}, and/or does not expect that the count of configurable frequency-domain resource units of the CSI-RS resource is less than min {24, 10}. where min {24, 10} is 10, so the terminal determines that the count of configurable frequency-domain resource units of the CSI-RS is greater than or equal to min {24, 10}, and/or does not expect that the count of configurable frequency-domain resource units of the CSI-RS resource is less than 10.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 10}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 10}; not expecting that the count of configurable frequency-domain resource units of the CSI-RS is less than min {24, 10}.

In an embodiment, if the first frequency-domain resource that the terminal can use for receiving downlink transmission includes a downlink subband and a guard band, the terminal may determine the downlink subband that occupies the smallest count of frequency-domain units and the guard band connected to the downlink subband as the first frequency-domain resource.

For example, among the count of frequency-domain units occupied by downlink subband #1 and guard band #1 connected to downlink subband #1 and the count of frequency-domain units occupied by downlink subband #2 and guard band #2 connected to downlink subband #2, the count of frequency-domain units occupied by downlink subband #2 and guard band #2 connected to downlink subband #2 is the smallest. Downlink subband #2 and guard band #2 connected to downlink subband #2 may be determined as the first frequency-domain resource capable of receiving downlink transmission. The second count is equal to the sum of the number of RBs contained in downlink subband #2 and guard band #2, that is, 10+2=12. Then the terminal determines that the count of configurable frequency-domain resource units of the CSI-RS is greater than or equal to min {24, 12}, and/or does not expect that the count of configurable frequency-domain resource units of the CSI-RS resource is less than min {24, 12}. where min {24, 12} is 12, so the terminal determines that the count of configurable frequency-domain resource units of the CSI-RS is greater than or equal to min {24, 12}, and/or does not expect that the count of configurable frequency-domain resource units of the CSI-RS resource is less than 12.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 12}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 12}; not expecting that the count of configurable frequency-domain resource units of the CSI-RS is less than min {24, 12}.

It should be noted that the manner of determining one continuous frequency-domain resource as the first frequency-domain resource among multiple continuous frequency-domain resources capable of receiving downlink transmission is not limited to the manner described in the above embodiments. For example, the first frequency-domain resource capable of receiving downlink transmission includes: a continuous frequency-domain resource, among all continuous frequency-domain resources capable of receiving downlink transmission, that occupies a largest count of frequency-domain units; for example, the first frequency-domain resource capable of receiving downlink transmission includes: a continuous frequency-domain resource, among all continuous frequency-domain resources capable of receiving downlink transmission, that is indicated by the network device (for example, the network device may indicate an identifier of the frequency-domain resource, a frequency-domain range, etc.); for example, the first frequency-domain resource capable of receiving downlink transmission includes: a continuous frequency-domain resource, among all continuous frequency-domain resources capable of receiving downlink transmission, where the count of frequency-domain units occupied is an integer multiple of a first value (for example, 4). If there are multiple, other conditions (such as identifier, starting frequency-domain resource unit) may be combined to determine, for example, determining the continuous frequency-domain resource corresponding to the smallest identifier that satisfies the above condition as the first frequency-domain resource capable of receiving downlink transmission; for example, the first frequency-domain resource capable of receiving downlink transmission includes: a continuous frequency-domain resource, among all continuous frequency-domain resources capable of receiving downlink transmission, whose identifier is a preset identifier (for example, the smallest identifier or the largest identifier).

In an embodiment, the first frequency-domain resource capable of receiving downlink transmission includes a non-continuous frequency-domain resource capable of receiving downlink transmission, where the channel state information reference signal resource may include non-continuous frequency-domain resource units.

That is, where the CSI-RS resource may include non-continuous frequency-domain resource units, the first frequency-domain resource capable of receiving downlink transmission may include a non-continuous frequency-domain resource capable of receiving downlink transmission. It should be noted that this does not mean that the first frequency-domain resource cannot include a continuous frequency-domain resource capable of receiving downlink transmission, but means that the first frequency-domain resource may include both a continuous frequency-domain resource capable of receiving downlink transmission and a non-continuous frequency-domain resource capable of receiving downlink transmission.

In an embodiment, if the first frequency-domain resource that the terminal can use for receiving downlink transmission includes a downlink subband, the terminal may determine the count of frequency-domain units occupied by all downlink subbands as the first frequency-domain resource.

For example, if there is only one downlink subband in the activated BWP, the terminal may determine this downlink subband as the first frequency-domain resource. Based on the embodiment shown in FIG. 2, there are two downlink subbands in the activated BWP, and the two downlink subbands are discontinuous. Then, where the CSI-RS resource includes non-continuous frequency-domain resource units, the first frequency-domain resource capable of receiving downlink transmission may be these two downlink subbands.

Taking FIG. 5 as an example, based on the embodiment shown in FIG. 2, the terminal may determine two downlink subbands, which are downlink subband #1 and downlink subband #2. The terminal may determine downlink subband #1 and downlink subband #2 as the first frequency-domain resource capable of receiving downlink transmission.

Taking the frequency-domain resource unit including RBs as an example, for example, in FIG. 5, downlink subband #1 includes 12 RBs, and downlink subband #2 includes 10 RBs. The total number of RBs contained in the two downlink subbands is 22, so the second count is 22. Then the terminal determines that the count of configurable frequency-domain resource units of the CSI-RS is greater than or equal to min {24, 22}, and/or does not expect that the count of configurable frequency-domain resource units of the CSI-RS resource is less than min {24, 22}. where min {24, 22} is 22, so the terminal determines that the count of configurable frequency-domain resource units of the CSI-RS is greater than or equal to min {24, 22}, and/or does not expect that the count of configurable frequency-domain resource units of the CSI-RS resource is less than 22.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 22}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 22}; not expecting that the count of configurable frequency-domain resource units of the CSI-RS is less than min {24, 22}.

In an embodiment, if the first frequency-domain resource that the terminal can use for receiving downlink transmission includes a downlink subband and a guard band, the terminal may determine a non-continuous frequency-domain resource capable of receiving downlink transmission that includes the downlink subband and the guard band as the first frequency-domain resource.

For example, the non-continuous frequency-domain resource includes downlink subband #1, downlink subband #2, guard band #1, and guard band #2. Downlink subband #1 and guard band #1 connected to downlink subband #1, and downlink subband #2 and guard band #2 connected to downlink subband #2 may be determined as the first frequency-domain resource capable of receiving downlink transmission. The second count is equal to the sum of the number of RBs contained in downlink subband #1, guard band #1, downlink subband #2, and guard band #2, that is, 12+2+10+2=26. Then the terminal determines that the count of configurable frequency-domain resource units of the CSI-RS is greater than or equal to min {24, 26}, and/or does not expect that the count of configurable frequency-domain resource units of the CSI-RS resource is less than min {24, 26}. where min {24, 26} is 24, so the terminal determines that the count of configurable frequency-domain resource units of the CSI-RS is greater than or equal to min {24, 26}, and/or does not expect that the count of configurable frequency-domain resource units of the CSI-RS resource is less than 24.

Alternatively, the terminal determines the CSI-RS resource according to a protocol agreement or configuration information of the network device, and receives the CSI-RS according to the CSI-RS resource, where the relationship between the count of configurable frequency-domain resource units of the CSI-RS resource and the minimum of the first count and the second count is agreed by the protocol or determined by the network device, and does not necessarily require terminal participation, for example, the count of configurable frequency-domain resource units of the CSI-RS resource is greater than or equal to min {24, 26}. In this case, the terminal does not necessarily need to perform one or more of the following actions: determining a first frequency-domain resource capable of receiving downlink transmission; determining the count of frequency-domain resource units occupied by the first frequency-domain resource; determining that the count of configurable frequency-domain resource units of the CSI-RS is greater than or equal to min {24, 26}; not expecting that the count of configurable frequency-domain resource units of the CSI-RS is less than min {24, 26}.

In an embodiment, the second count is an integer multiple of a first value; where the count of configured frequency-domain resource units of the channel state information reference signal resource is greater than or equal to the second count.

In an embodiment, although the terminal does not expect that the count of configurable frequency-domain resource units of the CSI-RS resource is less than the minimum of the first count and the second count, and/or the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, in order to ensure that the CSI-RS resource actually used for transmitting the CSI-RS does not exceed the frequency-domain range in which the terminal can receive the CSI-RS, the terminal may determine that the count of frequency-domain resource units of the CSI-RS resource is equal to the second count, that is, the count of frequency-domain resource units contained in the CSI-RS resource actually used for transmitting the CSI-RS is equal to the second count.

Since the count of frequency-domain resource units occupied by the CSI-RS resource needs to be a positive integer multiple of a first value, taking the frequency-domain resource unit as an RB and the first value as 4 as an example, the count of RBs occupied by the CSI-RS resource needs to be equal to 4n, where n is a positive integer. Therefore, the terminal may determine that the second count is an integer multiple of the first value, and/or the terminal does not expect that the second count is a value other than an integer multiple of the first value. Then the second count is an integer multiple of the first value, for example, 4n, thereby ensuring that the count of frequency-domain resource units contained in the CSI-RS resource actually used for transmitting the CSI-RS is a positive integer multiple of the first value, and the CSI-RS resource actually used for transmitting the CSI-RS does not exceed the frequency-domain range in which the terminal can receive the CSI-RS.

For example, the second count is equal to 8, which is 2 times 4. The count of frequency-domain resource units of the CSI-RS resource configured by the network device for the terminal is 12, which is greater than 8. In this case, the terminal may determine that the count of frequency-domain resource units contained in the CSI-RS resource actually used for transmitting the CSI-RS is equal to 8.

FIG. 6 is a schematic flowchart of another method for determining resource according to an embodiment of the present disclosure. The method for determining resource shown in this embodiment may be performed by a terminal. As shown in FIG. 6, the method for determining resource further includes:
Step S601: determining a count of frequency-domain resource units contained in the channel state information reference signal resource as a maximum value, among integer multiples of a first value, that is less than or equal to the second count; where the count of configured frequency-domain resource units of the channel state information reference signal resource is greater than or equal to the second count.

In an embodiment, although the terminal does not expect that the count of configurable frequency-domain resource units of the CSI-RS resource is less than the minimum of the first count and the second count, and/or the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, the terminal may determine the count of frequency-domain resource units of the CSI-RS resource as the maximum value, among integer multiples of the first value, that is less than or equal to the second count, that is, the count of frequency-domain resource units contained in the CSI-RS resource actually used for transmitting the CSI-RS is the maximum value, among integer multiples of the first value, that is less than or equal to the second count.

Since the count of frequency-domain resource units occupied by the CSI-RS resource needs to be a positive integer multiple of the first value, taking the frequency-domain resource unit as an RB and the first value as 4 as an example, the count of RBs occupied by the CSI-RS resource needs to be equal to 4n, where n is a positive integer. If the second count is a value other than an integer multiple of the first value, the terminal may determine the count of frequency-domain resource units contained in the CSI-RS resource as the maximum value, among integer multiples of the first value, that is less than or equal to the second count, thereby ensuring that the count of frequency-domain resource units contained in the CSI-RS resource actually used for transmitting the CSI-RS is a positive integer multiple of the first value, and the CSI-RS resource actually used for transmitting the CSI-RS does not exceed the frequency-domain range in which the terminal can receive the CSI-RS.

When the count of frequency-domain resource units of the CSI-RS resource configured by the network device for the terminal is greater than the second count, and the second count is an integer multiple of the first value, the terminal may determine that the count of RBs occupied by the CSI-RS resource is equal to the second count.

When the count of frequency-domain resource units of the CSI-RS resource configured by the network device for the terminal is greater than the second count, and the second count is not an integer multiple of the first value, the terminal may determine values equal to integer multiples of the first value among values less than the second count, determine the maximum value among the values equal to integer multiples of the first value (for example, 4), and then determine that the count of RBs occupied by the CSI-RS resource is equal to this maximum value.

For example, the second count is equal to 8, which is a positive integer multiple of 4. The count of frequency-domain resource units of the CSI-RS resource configured by the network device for the terminal is 12, which is greater than 8. In this case, the terminal may determine that the count of frequency-domain resource units of the CSI-RS resource is equal to 8.

For example, the second count is equal to 10, which is not a positive integer multiple of 4. The count of frequency-domain resource units of the CSI-RS resource configured by the network device for the terminal is 12, which is greater than 10. In this case, the terminal may determine values equal to 4n among values less than 10, which are 4 and 8, determine the maximum value 8 among 4 and 8, and then determine that the count of RBs occupied by the CSI-RS resource is equal to 8.

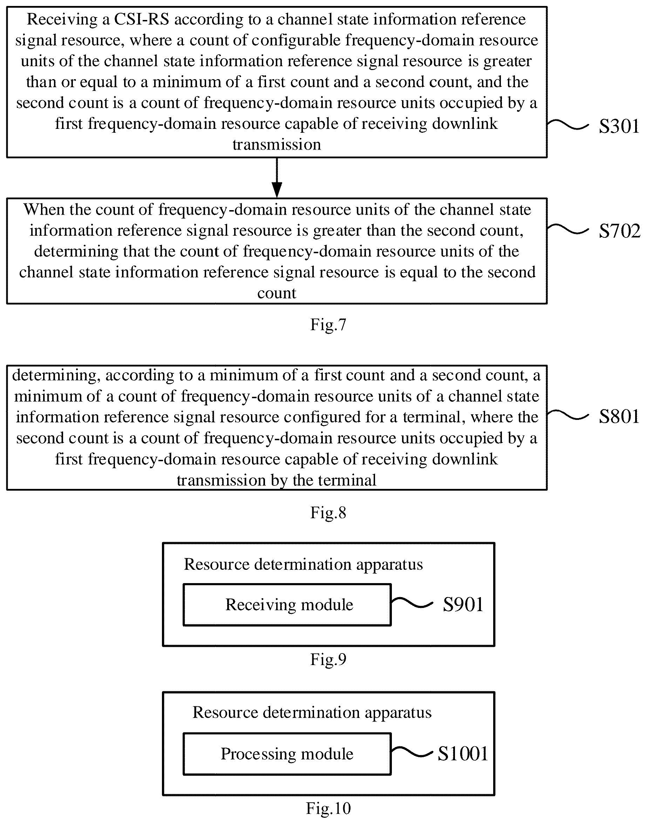

FIG. 7 is a schematic flowchart of another method for determining resource according to an embodiment of the present disclosure. The method for determining resource shown in this embodiment may be performed by a terminal. As shown in FIG. 7, the method for determining resource further includes:
Step S701: when the count of frequency-domain resource units of the channel state information reference signal resource is greater than the second count, determining that the count of frequency-domain resource units of the channel state information reference signal resource is equal to the second count.

In an embodiment, although the terminal does not expect that the count of configurable frequency-domain resource units of the CSI-RS resource is less than the minimum of the first count and the second count, and/or the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, the terminal may determine that the count of frequency-domain resource units of the CSI-RS resource is equal to the second count, thereby ensuring that the CSI-RS can be sent by the network device and received by the terminal within the range of the first frequency-domain resource capable of receiving downlink transmission, so as to prevent the network device from sending the CSI-RS outside the range of the first frequency-domain resource capable of receiving downlink transmission by the terminal, which the terminal cannot receive.

In an embodiment, the terminal may determine values equal to integer multiples of the first value among values less than or equal to the second count, determine the maximum value among the values equal to integer multiples of the first value (for example, 4), and the terminal may determine that the count of configurable frequency-domain resource units of the CSI-RS is greater than or equal to the minimum of the first count and this maximum value, and/or does not expect that the count of configurable frequency-domain resource units of the CSI-RS resource is less than the minimum of the first count and this maximum value.

For example, the first value is equal to 4, the first count is 24, and the second count is 10. The terminal may determine values equal to integer multiples of the first value among values less than or equal to the second count as 8 and 4, where 8 is the maximum value. Then the terminal may determine that the count of configurable frequency-domain resource units of the CSI-RS is greater than or equal to min {24, 8}, and/or does not expect that the count of configurable frequency-domain resource units of the CSI-RS resource is less than min {24, 8}=8.

In an embodiment, the second count is greater than or equal to the first count, and the count of configurable frequency-domain resource units of the CSI-RS resource is greater than or equal to the minimum of the first count and a third count, where the third count is the count of frequency-domain resource units occupied by the BWP where the first frequency-domain resource capable of receiving downlink transmission is located. And/or the terminal does not expect that the second count is less than the first count, and does not expect that the count of configurable frequency-domain resource units of the CSI-RS resource is less than the minimum of the first count and the third count. When the count of frequency-domain resource units of the CSI-RS resource configured by the network device for the terminal is greater than the third count, the terminal may determine that the count of frequency-domain resource units of the CSI-RS resource is equal to the second count.

For example, the minimum value of the count of configurable frequency-domain resource units of the CSI-RS resource is min {first count, third count}, and the count of RBs occupied by the first frequency-domain resource capable of receiving downlink transmission by the terminal is the second count. Since the third count is greater than or equal to the second count, under the condition that the second count is greater than or equal to the first count, it can be determined that the third count is greater than or equal to the first count, so the minimum value of the count of configurable frequency-domain resource units of the CSI-RS resource may be the first count. And the third count is greater than or equal to the count of configurable frequency-domain resource units of the CSI-RS resource. Therefore, it is possible to satisfy that the minimum value of the count of configurable frequency-domain resource units of the CSI-RS resource is min {first count, third count}, and the minimum value (first count) of the count of configurable frequency-domain resource units of the CSI-RS resource is within the range of the count of frequency-domain resource units (second count) occupied by the first frequency-domain resource capable of receiving downlink transmission by the terminal. Accordingly, the network side may configure the corresponding CSI-RS resource on the basis of satisfying the above conditions, so that the frequency-domain resource units configured for the CSI-RS resource are within the range of the first frequency-domain resource, ensuring that the terminal receives the CSI-RS within the receivable frequency-domain range.

In an embodiment, the count of configurable frequency-domain resource units of the CSI-RS resource is greater than or equal to the minimum of the first count and a third count, where the third count is the count of frequency-domain resource units occupied by the BWP where the first frequency-domain resource capable of receiving downlink transmission is located, and/or the count of frequency-domain resource units occupied by the downlink BWP where the terminal is located. Or, the terminal does not expect that the count of configurable frequency-domain resource units of the CSI-RS resource is less than the minimum of the first count and the third count. When the count of frequency-domain resource units of the CSI-RS resource configured by the network device for the terminal is greater than the second count, the terminal may determine that the count of frequency-domain resource units of the CSI-RS resource is equal to the second count. The second count is determined based on the previous embodiments, which will not be repeated here.

FIG. 8 is a schematic flowchart of a method for determining resource according to an embodiment of the present disclosure. The method for determining resource shown in this embodiment may be performed by a network device. The network device may communicate with a terminal. The network device includes, but is not limited to, base stations in communication systems such as 4G base stations, 5G base stations, 6G base stations, etc. The terminal includes, but is not limited to, a mobile phone, a tablet computer, a wearable device, a sensor, an Internet of Things device, and other communication devices.

As shown in FIG. 8, the method for determining resource may include the following steps:
Step S801: determining, according to a minimum of a first count and a second count, a minimum of a count of frequency-domain resource units of a channel state information reference signal resource configured for a terminal, where the second count is a count of frequency-domain resource units occupied by a first frequency-domain resource capable of receiving downlink transmission by the terminal.

In an embodiment, when configuring the CSI-RS resource for the terminal, the network device may first determine a first frequency-domain resource available for the terminal to receive downlink transmission, and determine the second count of frequency-domain resource units occupied by the first frequency-domain resource. Then, according to the minimum of the first count and the second count, the minimum of the count of frequency-domain resource units of the CSI-RS resource configured for the terminal is determined. Then, the count of frequency-domain resource units of the CSI-RS resource configured by the network device for the terminal will not be less than (i.e., greater than or equal to) the minimum of the first count and the second count. Accordingly, it is beneficial to ensure that the understanding of the CSI-RS resource by the network device and the terminal is consistent, so as to ensure the quality of subsequent communication between the network device and the terminal.

Correspondingly, the terminal may determine a first frequency-domain resource capable of receiving downlink transmission and determine the count of frequency-domain resource units occupied by the first frequency-domain resource, for example, referred to as the second count. Or, the terminal may not expect that the count of configurable frequency-domain resource units of the CSI-RS resource is less than the minimum of the first count and the second count.

In an embodiment, the first count is determined based on a predefined rule, or the first count is configured by the network device. For example, where the frequency-domain resource unit is an RB, the first count may be 24.

For example, the network device determines that the count of frequency-domain resource units occupied by the first frequency-domain resource capable of receiving downlink transmission by the terminal is 10, that is, the second count is 10. Then the minimum value of the count of frequency-domain resource units of the CSI-RS resource configured by the network device for the terminal is min {24, 10}. where min {24, 10} is 10, so the minimum value of the count of frequency-domain resource units of the CSI-RS resource configured for the terminal is 10.

In an embodiment, the first frequency-domain resource capable of being used for receiving downlink transmission includes at least one of: a downlink subband; a guard band.

In an embodiment, the downlink subband includes at least one of: a frequency-domain resource, configured in a downlink slot, other than an uplink subband; a frequency-domain resource, configured in a downlink slot, other than an uplink subband and a guard band; a frequency-domain resource, configured in a flexible slot, other than an uplink subband; a frequency-domain resource, configured in a flexible slot, other than an uplink subband and a guard band; a downlink subband configured in an uplink slot; a downlink subband configured in a flexible slot.

For example, the network device configures an uplink subband for the terminal in a downlink slot. Frequency-domain resources in the frequency-domain resources corresponding to the downlink slot other than the uplink subband may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the downlink slot other than the uplink subband.

For example, the network device configures an uplink subband and a guard band for the terminal in a downlink slot. Frequency-domain resources in the frequency-domain resources corresponding to the downlink slot other than the uplink subband and the guard band may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the downlink slot other than the uplink subband and the guard band.

For example, the network device configures an uplink subband for the terminal in a flexible slot. Frequency-domain resources in the frequency-domain resources corresponding to the flexible slot other than the uplink subband may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the flexible slot other than the uplink subband.

For example, the network device configures an uplink subband and a guard band for the terminal in a flexible slot. Frequency-domain resources in the frequency-domain resources corresponding to the flexible slot other than the uplink subband and the guard band may be referred to as a downlink subband, and the terminal may receive downlink transmission in the downlink subband. In this case, the first frequency-domain resource capable of being used for receiving downlink transmission includes frequency-domain resources in the frequency-domain resources corresponding to the flexible slot other than the uplink subband and the guard band.

For example, the network device configures a downlink subband for the terminal in an uplink slot. The terminal may receive downlink transmission in the downlink subband. In this case, the first frequency-domain resource capable of being used for receiving downlink transmission includes the downlink subband in the uplink slot.

For example, the network device configures a downlink subband for the terminal in a flexible slot. The terminal may receive downlink transmission in the downlink subband. In this case, the first frequency-domain resource capable of being used for receiving downlink transmission includes the downlink subband in the flexible slot.

In an embodiment, the first frequency-domain resource capable of receiving downlink transmission includes: continuous frequency-domain resources capable of receiving downlink transmission, where the channel state information reference signal resource includes continuous frequency-domain resource units.

That is, where the CSI-RS resource includes continuous frequency-domain resource units, the first frequency-domain resource capable of receiving downlink transmission may include continuous frequency-domain resources capable of receiving downlink transmission.

In an embodiment, if the first frequency-domain resource that the terminal can use for receiving downlink transmission includes a downlink subband, the network device may determine the downlink subband where the starting frequency-domain resource unit is located as the first frequency-domain resource.

For example, if there is only one downlink subband in the activated BWP, the network device may determine this downlink subband as the first frequency-domain resource. Based on the embodiment shown in FIG. 2, there are two downlink subbands in the activated BWP, and the two downlink subbands are discontinuous. Then, where the CSI-RS resource includes continuous frequency-domain resource units, the first frequency-domain resource capable of receiving downlink transmission may be any one of these two downlink subbands. Therefore, when there are multiple continuous frequency-domain resources capable of receiving downlink transmission, considering that the CSI-RS resource can only include continuous frequency-domain resources, the CSI-RS resource can only be transmitted on one of the continuous frequency-domain resources, and the network device needs to determine one continuous frequency-domain resource as the first frequency-domain resource.

In an embodiment, the first frequency-domain resource capable of receiving downlink transmission includes: a continuous frequency-domain resource which is capable of receiving downlink transmission based on a starting frequency-domain resource unit of the channel state information reference signal resource.

The network device may send configuration information of the CSI-RS resource to the terminal, and the terminal may determine the CSI-RS resource according to the configuration information. For example, the configuration information includes at least one of: a starting frequency-domain resource unit of the CSI-RS resource, a count of continuous frequency-domain resource units.

The network device may determine, among multiple continuous frequency-domain resources capable of receiving downlink transmission by the terminal, the continuous frequency-domain resource which is capable of receiving downlink transmission based on the starting frequency-domain resource unit as the first frequency-domain resource.

Exemplarily, a count of frequency-domain resource units by which the starting frequency-domain resource unit of the CSI-RS resource is offset from a starting frequency-domain resource unit of a common resource block CRB#0 may be a positive integer multiple of a first value.

As shown in FIG. 4, two downlink subbands may be determined in the activated BWP, which are downlink subband #1 and downlink subband #2. The network device determines, according to the configuration information of the CSI-RS resource sent to the terminal, that the starting frequency-domain resource unit of the CSI-RS resource is in downlink subband #1, so downlink subband #1 may be determined as the first frequency-domain resource capable of receiving downlink transmission.

Taking the frequency-domain resource unit including RBs as an example, for example, in FIG. 4, downlink subband #1 includes 12 RBs, and downlink subband #2 includes 10 RBs. If downlink subband #1 is used as the first frequency-domain resource capable of receiving downlink transmission based on the above analysis, the second count is 12, equal to the number of RBs contained in downlink subband #1, i.e., 12 RBs. Then the network device may determine that the minimum value of the count of frequency-domain resource units of the CSI-RS resource configured for the terminal is min {24, 12}. where min {24, 12} is 12, so the minimum value of the count of frequency-domain resource units of the CSI-RS resource configured for the terminal is 12.

In an embodiment, if the first frequency-domain resource that the terminal can use for receiving downlink transmission includes a downlink subband and a guard band, the network device may determine the downlink subband where the starting frequency-domain resource unit is located and the guard band connected to the downlink subband as the first frequency-domain resource.

For example, when the starting frequency-domain resource unit of the CSI-RS resource is in downlink subband #1 or guard band #1, downlink subband #1 and guard band #1 connected to downlink subband #1 may be determined as the first frequency-domain resource capable of receiving downlink transmission. The second count is equal to the sum of the number of RBs contained in downlink subband #1 and guard band #1, that is, 12+2=14. Then the network device may determine that the minimum value of the count of frequency-domain resource units of the CSI-RS resource configured for the terminal is min {24, 14}. where min {24, 14} is 14, so the minimum value of the count of frequency-domain resource units of the CSI-RS resource configured for the terminal is 14.

In an embodiment, the first frequency-domain resource capable of receiving downlink transmission includes: a continuous frequency-domain resource, among all continuous frequency-domain resources capable of receiving downlink transmission, that occupies a smallest count of frequency-domain units.

When the terminal has multiple continuous frequency-domain resources capable of receiving downlink transmission, the network device may determine the count of frequency-domain units occupied by each continuous frequency-domain resource, and use the continuous frequency-domain resource that occupies the smallest count of frequency-domain units as the first frequency-domain resource.

In an embodiment, if the first frequency-domain resource that the terminal can use for receiving downlink transmission includes a downlink subband, the network device may determine the count of frequency-domain units occupied by each downlink subband, and determine the downlink subband that occupies the smallest count of frequency-domain units as the first frequency-domain resource.

As shown in FIG. 5, two downlink subbands may be determined in the activated BWP, which are downlink subband #1 and downlink subband #2. The network device determines, according to the configuration information of the CSI-RS resource sent to the terminal, that the starting frequency-domain resource unit of the CSI-RS resource is in downlink subband #2, so downlink subband #2 may be determined as the first frequency-domain resource capable of receiving downlink transmission.

Taking the frequency-domain resource unit including RBs as an example, for example, in FIG. 5, downlink subband #1 includes 12 RBs, and downlink subband #2 includes 10 RBs. Therefore, among the two downlink subbands, downlink subband #2 occupies the smallest number of RBs. Therefore, downlink subband #2 may be used as the first frequency-domain resource capable of receiving downlink transmission, so the second count is 10. Then the network device may determine that the minimum value of the count of frequency-domain resource units of the CSI-RS resource configured for the terminal is min {24, 10}. where min {24, 10} is 10, so the minimum value of the count of frequency-domain resource units of the CSI-RS resource configured for the terminal is 10.

In an embodiment, if the first frequency-domain resource that the terminal can use for receiving downlink transmission includes a downlink subband and a guard band, the network device may determine the downlink subband that occupies the smallest count of frequency-domain units and the guard band connected to the downlink subband as the first frequency-domain resource.

For example, among the count of frequency-domain units occupied by downlink subband #1 and guard band #1 connected to downlink subband #1 and the count of frequency-domain units occupied by downlink subband #2 and guard band #2 connected to downlink subband #2, the count of frequency-domain units occupied by downlink subband #2 and guard band #2 connected to downlink subband #2 is the smallest. Downlink subband #2 and guard band #2 connected to downlink subband #2 may be determined as the first frequency-domain resource capable of receiving downlink transmission. The second count is equal to the sum of the number of RBs contained in downlink subband #2 and guard band #2, that is, 10+2=12. Then the network device may determine that the minimum value of the count of frequency-domain resource units of the CSI-RS resource configured for the terminal is min {24, 12}. where min {24, 12} is 12, so the minimum value of the count of frequency-domain resource units of the CSI-RS resource configured for the terminal is 12.

It should be noted that the manner of determining one continuous frequency-domain resource as the first frequency-domain resource among multiple continuous frequency-domain resources capable of receiving downlink transmission is not limited to the manner described in the above embodiments. For example, the first frequency-domain resource capable of receiving downlink transmission includes: a continuous frequency-domain resource, among all continuous frequency-domain resources capable of receiving downlink transmission, that occupies a largest count of frequency-domain units; for example, the first frequency-domain resource capable of receiving downlink transmission includes: a continuous frequency-domain resource, among all continuous frequency-domain resources capable of receiving downlink transmission, that is indicated by the network device (for example, the network device may indicate an identifier of the frequency-domain resource, a frequency-domain range, etc.); for example, the first frequency-domain resource capable of receiving downlink transmission includes: a continuous frequency-domain resource, among all continuous frequency-domain resources capable of receiving downlink transmission, where the count of frequency-domain units occupied is an integer multiple of a first value (for example, 4). If there are multiple, other conditions (such as identifier, starting frequency-domain resource unit) may be combined to determine, for example, determining the continuous frequency-domain resource corresponding to the smallest identifier that satisfies the above condition as the first frequency-domain resource capable of receiving downlink transmission; for example, the first frequency-domain resource capable of receiving downlink transmission includes: a continuous frequency-domain resource, among all continuous frequency-domain resources capable of receiving downlink transmission, whose identifier is a preset identifier (for example, the smallest identifier or the largest identifier).

In an embodiment, the first frequency-domain resource capable of receiving downlink transmission includes a non-continuous frequency-domain resource capable of receiving downlink transmission, where the channel state information reference signal resource may include non-continuous frequency-domain resource units.

That is, where the CSI-RS resource may include non-continuous frequency-domain resource units, the first frequency-domain resource capable of receiving downlink transmission may include a non-continuous frequency-domain resource capable of receiving downlink transmission. It should be noted that this does not mean that the first frequency-domain resource cannot include a continuous frequency-domain resource capable of receiving downlink transmission, but means that the first frequency-domain resource may include both a continuous frequency-domain resource capable of receiving downlink transmission and a non-continuous frequency-domain resource capable of receiving downlink transmission.

In an embodiment, if the first frequency-domain resource that the terminal can use for receiving downlink transmission includes a downlink subband, the network device may determine the count of frequency-domain units occupied by all downlink subbands as the first frequency-domain resource.

For example, if there is only one downlink subband in the activated BWP, the network device may determine this downlink subband as the first frequency-domain resource. Based on the embodiment shown in FIG. 2, there are two downlink subbands in the activated BWP, and the two downlink subbands are discontinuous. Then, where the CSI-RS resource includes non-continuous frequency-domain resource units, the first frequency-domain resource capable of receiving downlink transmission may be these two downlink subbands.

Taking FIG. 5 as an example, the terminal may determine two downlink subbands, which are downlink subband #1 and downlink subband #2. The terminal may determine downlink subband #1 and downlink subband #2 as the first frequency-domain resource capable of receiving downlink transmission.

Taking the frequency-domain resource unit including RBs as an example, for example, in FIG. 5, downlink subband #1 includes 12 RBs, and downlink subband #2 includes 10 RBs. The total number of RBs contained in the two downlink subbands is 22, so the second count is 22. Then the network device may determine that the minimum value of the count of frequency-domain resource units of the CSI-RS resource configured for the terminal is min {24, 22}. where min {24, 22} is 22, so the minimum value of the count of frequency-domain resource units of the CSI-RS resource configured for the terminal is 22.

In an embodiment, if the first frequency-domain resource that the terminal can use for receiving downlink transmission includes a downlink subband and a guard band, the network device may determine a non-continuous frequency-domain resource capable of receiving downlink transmission that includes the downlink subband and the guard band as the first frequency-domain resource.

For example, the non-continuous frequency-domain resource includes downlink subband #1, downlink subband #2, guard band #1, and guard band #2. Downlink subband #1 and guard band #1 connected to downlink subband #1, and downlink subband #2 and guard band #2 connected to downlink subband #2 may be determined as the first frequency-domain resource capable of receiving downlink transmission. The second count is equal to the sum of the number of RBs contained in downlink subband #1, guard band #1, downlink subband #2, and guard band #2, that is, 12+2+10+2=26. Then the network device may determine that the minimum value of the count of frequency-domain resource units of the CSI-RS resource configured for the terminal is min {24, 26}. where min {24, 26} is 24, so the minimum value of the count of frequency-domain resource units of the CSI-RS resource configured for the terminal is 24.

In an embodiment, the method for determining resource further includes: determining that the second count is an integer multiple of a first value; where the count of configured frequency-domain resource units of the channel state information reference signal resource is greater than or equal to the second count.

In an embodiment, although the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, in order to ensure that the CSI-RS resource actually used for transmitting the CSI-RS does not exceed the frequency-domain range in which the terminal can receive the CSI-RS, the terminal will determine that the count of frequency-domain resource units of the CSI-RS resource is equal to the second count, that is, the count of frequency-domain resource units contained in the CSI-RS resource actually used for transmitting the CSI-RS is equal to the second count.

Since the count of frequency-domain resource units occupied by the CSI-RS resource needs to be a positive integer multiple of the first value, taking the frequency-domain resource unit as an RB and the first value as 4 as an example, the count of RBs occupied by the CSI-RS resource needs to be equal to 4n, where n is a positive integer. Therefore, the terminal may determine that the second count is an integer multiple of the first value, and/or the terminal does not expect that the second count is a value other than an integer multiple of the first value. Then the second count is an integer multiple of the first value, for example, 4n. Then the network device also needs to determine that the second count is an integer multiple of the first value, thereby ensuring that the terminal and the network device have a consistent understanding of the count of frequency-domain resource units contained in the CSI-RS resource actually used for transmitting the CSI-RS, which is a positive integer multiple of the first value, and the CSI-RS resource actually used for transmitting the CSI-RS does not exceed the frequency-domain range in which the terminal can receive the CSI-RS.

For example, the second count is equal to 8, which is 2 times 4. The count of frequency-domain resource units of the CSI-RS resource configured by the network device for the terminal is 12, which is greater than 8. In this case, the terminal may determine that the count of frequency-domain resource units contained in the CSI-RS resource actually used for transmitting the CSI-RS is equal to 8, and the network device will also determine that the count of frequency-domain resource units contained in the CSI-RS resource actually used for transmitting the CSI-RS is equal to 8.

In an embodiment, the method for determining resource further includes: determining a count of frequency-domain resource units contained in the channel state information reference signal resource as a maximum value, among integer multiples of a first value, that is less than or equal to the second count; where the count of configured frequency-domain resource units of the channel state information reference signal resource is not equal to an integer multiple of the first value.

In an embodiment, although the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, the terminal may determine the count of frequency-domain resource units of the CSI-RS resource as the maximum value, among integer multiples of the first value, that is less than or equal to the second count, that is, the count of frequency-domain resource units contained in the CSI-RS resource actually used for transmitting the CSI-RS is the maximum value, among integer multiples of the first value, that is less than or equal to the second count.

Since the count of frequency-domain resource units occupied by the CSI-RS resource needs to be a positive integer multiple of the first value, taking the frequency-domain resource unit as an RB and the first value as 4 as an example, the count of RBs occupied by the CSI-RS resource needs to be equal to 4n, where n is a positive integer. If the second count is a value other than an integer multiple of the first value, the network device may determine the count of frequency-domain resource units contained in the CSI-RS resource as the maximum value, among integer multiples of the first value, that is less than or equal to the second count, thereby ensuring that the count of frequency-domain resource units contained in the CSI-RS resource actually used for transmitting the CSI-RS is a positive integer multiple of the first value, and the CSI-RS resource actually used for transmitting the CSI-RS does not exceed the frequency-domain range in which the terminal can receive the CSI-RS.

When the count of frequency-domain resource units of the CSI-RS resource configured by the network device for the terminal is greater than the second count, and the second count is an integer multiple of the first value, the terminal may determine that the count of RBs occupied by the CSI-RS resource is equal to the second count.

When the count of frequency-domain resource units of the CSI-RS resource configured by the network device for the terminal is greater than the second count, and the second count is not an integer multiple of the first value, the terminal may determine values equal to integer multiples of the first value among values less than the second count, determine the maximum value among the values equal to integer multiples of the first value (for example, 4), and then determine that the count of RBs occupied by the CSI-RS resource is equal to this maximum value. The network device may also determine that the count of RBs occupied by the CSI-RS resource is equal to this maximum value, thereby ensuring that the terminal and the network device have a consistent understanding of the count of frequency-domain resource units contained in the CSI-RS resource actually used for transmitting the CSI-RS, which is this maximum value.

For example, the second count is equal to 8, which is a positive integer multiple of 4. The count of frequency-domain resource units of the CSI-RS resource configured by the network device for the terminal is 12, which is greater than 8. In this case, the terminal may determine that the count of frequency-domain resource units of the CSI-RS resource is equal to 8, and the network device may also determine that the count of frequency-domain resource units of the CSI-RS resource is equal to 8.

For example, the second count is equal to 10, which is not a positive integer multiple of 4. The count of frequency-domain resource units of the CSI-RS resource configured by the network device for the terminal is 12, which is greater than 10. In this case, the terminal may determine values equal to 4n among values less than 10, which are 4 and 8, determine the maximum value 8 among 4 and 8, and then determine that the count of RBs occupied by the CSI-RS resource is equal to 8. The network device may also determine that the count of frequency-domain resource units of the CSI-RS resource is equal to 8.

In an embodiment, the method for determining resource further includes: when the count of frequency-domain resource units of the channel state information reference signal resource is greater than the second count, determining that the count of frequency-domain resource units of the channel state information reference signal resource is equal to the second count.

In an embodiment, although the count of frequency-domain resource units of the CSI-RS resource configured by the network device for the terminal is not less than the minimum of the first count and the second count, the count of frequency-domain resource units of the CSI-RS resource configured by the network device for the terminal may be greater than or equal to the second count.

When the count of frequency-domain resource units of the CSI-RS resource configured by the network device for the terminal is greater than the second count, the terminal may determine that the count of frequency-domain resource units of the CSI-RS resource is equal to the second count, and the network device may also determine that the count of frequency-domain resource units of the CSI-RS resource is equal to the second count, thereby ensuring that the network device can send the CSI-RS to the terminal within the range of the first frequency-domain resource capable of receiving downlink transmission, so as to prevent the network device from sending the CSI-RS outside the range of the first frequency-domain resource capable of receiving downlink transmission by the terminal, which the terminal cannot receive.

In an embodiment, the network device may determine values equal to integer multiples of the first value among values less than or equal to the second count, determine the maximum value among the values equal to integer multiples of the first value (for example, 4), and the network device may determine that the count of configurable frequency-domain resource units of the CSI-RS resource is not less than the minimum of the first count and this maximum value.

For example, the first value is equal to 4, the first count is 24, and the second count is 10. The network device may determine values equal to integer multiples of the first value among values less than or equal to the second count as 8 and 4, where 8 is the maximum value. Then the network device may determine that the count of configurable frequency-domain resource units of the CSI-RS resource is not less than min {24, 8}=8.

In an embodiment, the second count is greater than or equal to the first count, and the count of configurable frequency-domain resource units of the CSI-RS resource is greater than or equal to the minimum of the first count and a third count, where the third count is the count of frequency-domain resource units occupied by the BWP where the first frequency-domain resource capable of receiving downlink transmission is located. When the count of frequency-domain resource units of the CSI-RS resource configured by the network device for the terminal is greater than the second count, the terminal may determine that the count of frequency-domain resource units of the CSI-RS resource is equal to the second count.

For example, the minimum value of the count of configurable frequency-domain resource units of the CSI-RS resource is min {first count, third count}. Since the third count is greater than or equal to the first count, the minimum value of the count of configurable frequency-domain resource units of the CSI-RS resource may be the first count. And the third count is greater than or equal to the count of configurable frequency-domain resource units of the CSI-RS resource. Therefore, it is possible to satisfy that the minimum value of the count of configurable frequency-domain resource units of the CSI-RS resource is min {first count, third count}, and the minimum value (first count) of the count of configurable frequency-domain resource units of the CSI-RS resource is within the range of the count of frequency-domain resource units (second count) occupied by the first frequency-domain resource capable of receiving downlink transmission by the terminal. The situation where the count of configurable frequency-domain resource units of the CSI-RS resource is greater than the second count will not occur, ensuring that the terminal receives the CSI-RS within the receivable frequency-domain range.

In an embodiment, the count of configurable frequency-domain resource units of the CSI-RS resource is greater than or equal to the minimum of the first count and a third count, where the third count is the count of frequency-domain resource units occupied by the BWP where the first frequency-domain resource capable of receiving downlink transmission is located. When the count of frequency-domain resource units of the CSI-RS resource configured by the network device for the terminal is greater than the second count, the terminal may determine that the count of frequency-domain resource units of the CSI-RS resource is equal to the second count.

Embodiments of the present disclosure also provide a method for determining resource performed by a communication system, where the communication system includes a terminal and a network device.

where the terminal is configured to receive a channel state information reference signal, where a count of configurable frequency-domain resource units of a channel state information reference signal resource is greater than or equal to a minimum of a first count and a second count, and the second count is a count of frequency-domain resource units occupied by a first frequency-domain resource capable of receiving downlink transmission.

The network device is configured to determine, according to a minimum of the first count and the second count, a minimum of a count of frequency-domain resource units of a channel state information reference signal resource configured for the terminal, where the second count is a count of frequency-domain resource units occupied by a first frequency-domain resource capable of receiving downlink transmission by the terminal.

Corresponding to the embodiments of the foregoing method for determining resource, the present disclosure also provides embodiments of a resource determination apparatus.

FIG. 9 is a schematic block diagram of a resource determination apparatus according to an embodiment of the present disclosure. The resource determination apparatus is configured in a terminal device. As shown in FIG. 9, the resource determination apparatus includes:

a receiving module 901, configured to receive a channel state information reference signal according to a channel state information reference signal resource, where a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

In an embodiment, the first frequency-domain resource capable of receiving downlink transmission includes: continuous frequency-domain resources capable of receiving downlink transmission, where the channel state information reference signal resource includes continuous frequency-domain resource units.

In an embodiment, the first frequency-domain resource capable of receiving downlink transmission includes: a continuous frequency-domain resource which is capable of receiving downlink transmission based on a starting frequency-domain resource unit of the channel state information reference signal resource.

In an embodiment, the first frequency-domain resource capable of receiving downlink transmission includes: a continuous frequency-domain resource, among all continuous frequency-domain resources capable of receiving downlink transmission, that occupies a smallest count of frequency-domain units.

In an embodiment, the first frequency-domain resource capable of receiving downlink transmission includes a non-continuous frequency-domain resource capable of receiving downlink transmission, where the channel state information reference signal resource includes non-continuous frequency-domain resource units.

In an embodiment, the first frequency-domain resource capable of being used for receiving downlink transmission includes at least one of: a downlink subband; a guard band.

In an embodiment, the downlink subband includes at least one of: a frequency-domain resource, configured in a downlink slot, other than an uplink subband; a frequency-domain resource, configured in a downlink slot, other than an uplink subband and a guard band; a frequency-domain resource, configured in a flexible slot, other than an uplink subband; a frequency-domain resource, configured in a flexible slot, other than an uplink subband and a guard band; a downlink subband configured in an uplink slot; a downlink subband configured in a flexible slot.

In an embodiment, the first count is determined based on a predefined rule, or the first count is configured by a network device.

In an embodiment, the second count is an integer multiple of a first value; where the count of configured frequency-domain resource units of the channel state information reference signal resource is greater than or equal to the second count.

In an embodiment, a processing module is further configured to determine a count of frequency-domain resource units contained in the channel state information reference signal resource as a maximum value, among integer multiples of a first value, that is less than or equal to the second count; where the count of configured frequency-domain resource units of the channel state information reference signal resource is greater than or equal to the second count.

In an embodiment, the processing module is further configured to, when the count of frequency-domain resource units of the channel state information reference signal resource is greater than the second count, determine that the count of frequency-domain resource units of the channel state information reference signal resource is equal to the second count.

FIG. 10 is a schematic block diagram of a resource determination apparatus according to an embodiment of the present disclosure. The resource determination apparatus is configured in a network-side device. As shown in FIG. 10, the resource determination apparatus includes:

a processing module 1001, configured to determine, according to a minimum of a first count and a second count, a minimum of a count of frequency-domain resource units of a channel state information reference signal resource configured for a terminal, where the second count is a count of frequency-domain resource units occupied by a first frequency-domain resource capable of receiving downlink transmission by the terminal.

In an embodiment, the first frequency-domain resource capable of receiving downlink transmission includes: continuous frequency-domain resources capable of receiving downlink transmission, where the channel state information reference signal resource includes continuous frequency-domain resource units.

In an embodiment, the first frequency-domain resource capable of receiving downlink transmission includes: a continuous frequency-domain resource which is capable of receiving downlink transmission based on a starting frequency-domain resource unit of the channel state information reference signal resource.

In an embodiment, the first frequency-domain resource capable of receiving downlink transmission includes: a continuous frequency-domain resource, among all continuous frequency-domain resources capable of receiving downlink transmission, that occupies a smallest count of frequency-domain units.

In an embodiment, the first frequency-domain resource capable of receiving downlink transmission includes a non-continuous frequency-domain resource capable of receiving downlink transmission, where the channel state information reference signal resource includes non-continuous frequency-domain resource units.

In an embodiment, the first frequency-domain resource capable of being used for receiving downlink transmission includes at least one of: a downlink subband; a guard band.

In an embodiment, the downlink subband includes at least one of: a frequency-domain resource, configured in a downlink slot, other than an uplink subband; a frequency-domain resource, configured in a downlink slot, other than an uplink subband and a guard band; a frequency-domain resource, configured in a flexible slot, other than an uplink subband; a frequency-domain resource, configured in a flexible slot, other than an uplink subband and a guard band; a downlink subband configured in an uplink slot; a downlink subband configured in a flexible slot.

In an embodiment, the first count is determined based on a predefined rule, or the first count is configured by a network device.

In an embodiment, the processing module is further configured to determine that the second count is an integer multiple of a first value; where the count of configured frequency-domain resource units of the channel state information reference signal resource is greater than or equal to the second count.

In an embodiment, the processing module is further configured to determine a count of frequency-domain resource units contained in the channel state information reference signal resource as a maximum value, among integer multiples of a first value, that is less than or equal to the second count; where the count of configured frequency-domain resource units of the channel state information reference signal resource is not equal to an integer multiple of the first value.

In an embodiment, the processing module is further configured to, when the count of frequency-domain resource units of the channel state information reference signal resource is greater than the second count, determine that the count of frequency-domain resource units of the channel state information reference signal resource is equal to the second count.

For the apparatus embodiments, since they basically correspond to the method embodiments, reference may be made to the description of the method embodiments for relevant parts. The apparatus embodiments described above are merely illustrative. The modules described as separate components may or may not be physically separate, and the components displayed as modules may or may not be physical modules, that is, they may be located in one place, or may be distributed to multiple network modules. Some or all of the modules may be selected according to actual needs to achieve the purpose of the solution of the embodiments. Those of ordinary skill in the art may understand and implement without creative effort.

Embodiments of the present disclosure also provide a communication system, including a terminal and a network device, where the terminal is configured to implement the method for determining resource performed by the terminal according to any of the foregoing embodiments, and the network device is configured to implement the method for determining resource performed by the network device according to any of the foregoing embodiments.

Embodiments of the present disclosure also provide a communication device, including: a processor; a memory for storing a computer program; when the computer program is executed by the processor, the method for determining resource performed by the terminal according to any of the foregoing embodiments is implemented.

Embodiments of the present disclosure also provide a communication device, including: a processor; a memory for storing a computer program; when the computer program is executed by the processor, the method for determining resource performed by the network device according to any of the foregoing embodiments is implemented.

Embodiments of the present disclosure also provide a computer-readable storage medium for storing a computer program, where when the computer program is executed by a processor, the method for determining resource performed by the terminal according to any of the foregoing embodiments is implemented.

Embodiments of the present disclosure also provide a computer-readable storage medium for storing a computer program, where when the computer program is executed by a processor, the method for determining resource performed by the network device according to any of the foregoing embodiments is implemented.

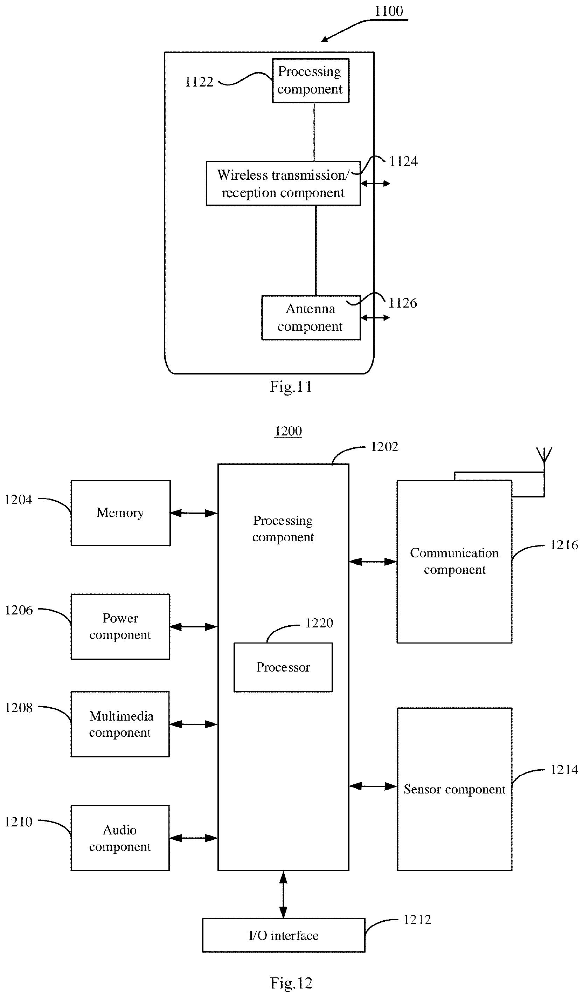

As shown in FIG. 11, FIG. 11 is a schematic block diagram of an apparatus 1100 for XX according to an embodiment of the present disclosure. The apparatus 1100 may be a base station. Referring to FIG. 11, the apparatus 1100 includes a processing component 1122, a wireless transmission/reception component 1124, an antenna component 1126, and a signal processing part specific to the wireless interface. The processing component 1122 may further include one or more processors. One of the processors in the processing component 1122 may be configured to implement the method for determining resource performed by the network device according to any of the foregoing embodiments.

FIG. 12 is a schematic block diagram of an apparatus 1200 for resource determination according to an embodiment of the present disclosure. For example, the apparatus 1200 may be a terminal, such as a mobile phone, a computer, a digital broadcast terminal, a messaging device, a gaming console, a tablet device, a medical device, a fitness device, a personal digital assistant, etc.

Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps of the method for determining resource performed by the terminal according to any of the foregoing embodiments. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any application or method operated on the apparatus 1200, contact data, phonebook data, messages, pictures, video, etc.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes a touch panel, the screen may be implemented as a touch screen to receive input signals from the user.

The audio component 1210 is configured to output and/or input audio signals. For example, the audio component 1210 includes a microphone (MIC) configured to receive external audio signals when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a start button, and a lock button.

The sensor component 1214 includes one or more sensors to provide status assessments of various aspects of the apparatus 1200.

The communication component 1216 is configured to facilitate communication, wired or wirelessly, between the apparatus 1200 and other devices. The apparatus 1200 can access a wireless network based on a communication standard, such as WiFi, 2G, 3G, 4G LTE, 5G NR, or a combination thereof. In an exemplary embodiment, the communication component 1216 receives broadcast signals or broadcast associated information from an external broadcast management system via a broadcast channel. In an exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the method for determining resource performed by the terminal according to any of the foregoing embodiments.

In an exemplary embodiment, there is also provided a non-transitory computer-readable storage medium including instructions, such as included in the memory 1204, executable by the processor 1220 of the apparatus 1200 to perform the method for determining resource performed by the terminal according to any of the foregoing embodiments. For example, the non-transitory computer-readable storage medium may be a ROM, a random access memory (RAM), a CD-ROM, a magnetic tape, a floppy disc, an optical data storage device, and the like.

Other embodiments of the present disclosure will be readily apparent to those skilled in the art upon consideration of the specification and practice of the disclosure disclosed herein. This disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It should be understood that the present disclosure is not limited to the precise structure that has been described above and shown in the drawings, and that various modifications and changes may be made without departing from the scope thereof. The scope of the present disclosure is limited only by the appended claims.

## Claims

1. A method for determining resource, performed by a terminal, comprising:
receiving a channel state information reference signal according to a channel state information reference signal resource, wherein a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

2. The method according to claim 1, wherein the first frequency-domain resource capable of receiving downlink transmission comprises:
continuous frequency-domain resources capable of receiving downlink transmission, wherein the channel state information reference signal resource comprises continuous frequency-domain resource units.

3. The method according to claim 2, wherein the first frequency-domain resource capable of receiving downlink transmission comprises:
a continuous frequency-domain resource which is capable of receiving downlink transmission based on a starting frequency-domain resource unit of the channel state information reference signal resource.

4. The method according to claim 2, wherein the first frequency-domain resource capable of receiving downlink transmission comprises:
a continuous frequency-domain resource, among all of the continuous frequency-domain resources capable of receiving downlink transmission, that occupies a smallest count of frequency-domain units.

5. The method according to claim 1, wherein the first frequency-domain resource capable of receiving downlink transmission comprises a non-continuous frequency-domain resource capable of receiving downlink transmission, and the channel state information reference signal resource comprises non-continuous frequency-domain resource units.

6. The method according to any one of claims 1 to 5, wherein the first frequency-domain resource capable of receiving downlink transmission comprises at least one of:
a downlink subband; or
a guard band.

7. The method according to claim 6, wherein the downlink subband comprises at least one of:
a frequency-domain resource, configured in a downlink time slot, other than an uplink subband;
a frequency-domain resource, configured in a downlink time slot, other than an uplink subband and the guard band;
a frequency-domain resource, configured in a flexible time slot, other than an uplink subband;
a frequency-domain resource, configured in a flexible time slot, other than an uplink subband and the guard band;
a downlink subband configured in an uplink time slot; or
a downlink subband configured in a flexible time slot.

8. The method according to any one of claims 1 to 7, wherein the first count is determined based on a predefined rule, or the first count is configured by a network device.

9. The method according to any one of claims 1 to 8, wherein the second count is an integer multiple of a first value, and a count of configured frequency-domain resource units of the channel state information reference signal resource is greater than or equal to the second count.

10. The method according to any one of claims 1 to 8, further comprising:
determining a count of frequency-domain resource units contained in the channel state information reference signal resource as a maximum, among integer multiples of a first value, that is less than or equal to the second count;
wherein a count of configured frequency-domain resource units of the channel state information reference signal resource is greater than or equal to the second count.

11. The method according to any one of claims 1 to 8, further comprising:
in a case where a count of frequency-domain resource units of the channel state information reference signal resource is greater than the second count, determining that the count of frequency-domain resource units of the channel state information reference signal resource is equal to the second count.

12. A method for determining resource, performed by a network device, comprising:
determining, according to a minimum between a first count and a second count, a minimum of a count of frequency-domain resource units of a channel state information reference signal resource configured for a terminal, wherein the second count is a count of frequency-domain resource units occupied by a first frequency-domain resource capable of receiving downlink transmission by the terminal.

13. The method according to claim 12, wherein the first frequency-domain resource capable of receiving downlink transmission comprises:
continuous frequency-domain resources capable of receiving downlink transmission, wherein the channel state information reference signal resource comprises continuous frequency-domain resource units.

14. The method according to claim 13, wherein the first frequency-domain resource capable of receiving downlink transmission comprises:
a continuous frequency-domain resource which is capable of receiving downlink transmission based on a starting frequency-domain resource unit of the channel state information reference signal resource.

15. The method according to claim 13, wherein the first frequency-domain resource capable of receiving downlink transmission comprises:
a continuous frequency-domain resource, among all of the continuous frequency-domain resources capable of receiving downlink transmission, that occupies a smallest count of frequency-domain units.

16. The method according to claim 12, wherein the first frequency-domain resource capable of receiving downlink transmission comprises a non-continuous frequency-domain resource capable of receiving downlink transmission, and the channel state information reference signal resource comprises non-continuous frequency-domain resource units.

17. The method according to any one of claims 12 to 16, wherein the first frequency-domain resource capable of receiving downlink transmission comprises at least one of:
a downlink subband; or
a guard band.

18. The method according to claim 17, wherein the downlink subband comprises at least one of:
a frequency-domain resource, configured in a downlink time slot, other than an uplink subband;
a frequency-domain resource, configured in a downlink time slot, other than an uplink subband and the guard band;
a frequency-domain resource, configured in a flexible time slot, other than an uplink subband;
a frequency-domain resource, configured in a flexible time slot, other than an uplink subband and the guard band;
a downlink subband configured in an uplink time slot; or
a downlink subband configured in a flexible time slot.

19. The method according to any one of claims 12 to 18, wherein the first count is determined based on a predefined rule, or the first count is configured by a network device.

20. The method according to any one of claims 12 to 19, further comprising:
determining that the second count is an integer multiple of a first value;
wherein a count of configured frequency-domain resource units of the channel state information reference signal resource is greater than or equal to the second count.

21. The method according to any one of claims 12 to 19, further comprising:
determining a count of frequency-domain resource units contained in the channel state information reference signal resource as a maximum value, among integer multiples of a first value, that is less than or equal to the second count;
wherein a count of configured frequency-domain resource units of the channel state information reference signal resource is greater than or equal to the second count.

22. The method according to any one of claims 12 to 19, further comprising:
in a case where a count of frequency-domain resource units of the channel state information reference signal resource is greater than the second count, determining that the count of frequency-domain resource units of the channel state information reference signal resource is equal to the second count.

23. A resource determination apparatus, configured in a terminal, comprising:
a receiving module configured to receive a channel state information reference signal according to a channel state information reference signal resource, wherein a count of configurable frequency-domain resource units of the channel state information reference signal resource is greater than or equal to a minimum of a first count and a second count, and the second count is a count of frequency-domain resource units occupied by a first frequency-domain resource capable of receiving downlink transmission.

24. A resource determination apparatus, configured in a network-side device, comprising:
a processing module configured to determine, according to a minimum of a first count and a second count, a minimum of a count of frequency-domain resource units of a channel state information reference signal resource configured for a terminal, wherein the second count is a count of frequency-domain resource units occupied by a first frequency-domain resource capable of receiving downlink transmission by the terminal.

25. A communication system, comprising a terminal and a network device, wherein the terminal is configured to perform the method for determining resource according to any one of claims 1 to 11, and the network device is configured to perform the method for determining resource according to any one of claims 12 to 22.

26. A communication apparatus, comprising:
a processor;
a memory for storing a computer program;
wherein the computer program is executed by the processor to implement the method for determining resource according to any one of claims 1 to 11.

27. A communication apparatus, comprising:
a processor;
a memory for storing a computer program;
wherein the computer program is executed by the processor to implement the method for determining resource according to any one of claims 12 to 22.

28. A computer-readable storage medium having stored therein a computer-executable program that, when executed by a processor, causes the method for determining resource according to any one of claims 1 to 11 to be implemented.

29. A computer-readable storage medium having stored therein a computer-executable program that, when executed by a processor, causes the method for determining resource according to any one of claims 12 to 22 to be implemented.
